# EUROPEAN PATENT APPLICATION

(11) **EP 2 075 713 A1**
(43) Date of publication of application: **01.07.2009**
(21) Application number: 07291544.0
(22) Date of filing: 17.12.2007
(51) Int. Cl.: G06F 17/30

(54) **A method and associated system for delivery of objects**

(71) Applicant: Alcatel Lucent, 75008 Paris (FR)
(72) Inventor: Van Broeck, Sigurd, 2980 Zoersel (BE); Trappeniers, Lieven, 2200 Herentals (BE); Lou, Zhe, 2000 Antwerpen (BE); Lauwers, Thais, 2950 Kapellen (BE); Godon, Marc Bruno Frieda, 1840 Londerzeel (BE); Criel, Johan Georges Prosper, 9000 Gent (BE); Claeys, Laurence Annie Hugo Marie, 9000 Gent (BE)
(74) Representative: Plas, Axel Ivo Michel

(57) **Abstract**

The present invention relates to a method for transferring an object between a source and a destination. The source has a first identification in a first world and the destination has a second identification in a second world. The method involves the step of sending the object from the source in the first world to the destination using a third identification. Then the object and/or the destination identification are translated. Finally the object or a translated object is delivered to the destination in the second world.

## Description

### Field of the Invention

The present invention relates to the transfer of objects between two entities (physical or legal entities such as persons, companies, organizations, groups, ...) and more in particular to the transfer of objects between two entities involving different worlds or communities. A word in the context of this patent application is seen as a real (e.g. physical) or virtual (e.g. digital) environment wherein a community of entities can interact according to certain rules and formats, and wherein entities can share, transfer, source, deliver, sell, buy, and manipulate objects, i.e. either real or virtual objects such as goods, gifts, packages, mail, messages, etc. Real object can be tangible objects which can be manipulated by a physical person or a physical device and generally real objects are goods, gifts, packages, printed paperwork, etc in the real world. Virtual objects can objects which only exist in a virtual world but which are not tangible to a physical person such as a digital letter, newspapers, picture, 3D model, etc.

### Background of the Invention

In the real, physical world there are various systems that can be used to deliver objects from a source to a destination. For instance regular mail service allows for the delivery of letters, small parcels, etc. by simply indicating an identification of the destination and delivering the object to an office or mailbox. Larger parcels are often transported using courier services which operate nation wide or internationally. In general, such services are able to receive an object from a source at one location and deliver the object to the indicated destination typically at another location.

A similar system can be found in certain online worlds or communities. For instance Mass Multiplayer Online Role Playing Games (MMORPG) or online communities such as Second Life from Linden Labs often provide a way of transferring in-game objects from one person or character (the source) to another person or character (the destination). Some of these games or communities also allow their users to create objects and to sell such objects.

In general, both in the real world and a virtual world there is a way of transferring objects by some sort of automated mailing system which is based on an identification of the destination. However, in either of these worlds there is a specific way of identifying the destination. The real world often uses a person's name or the name of an entity and address for classic mail deliveries and the virtual world often uses only a character name or avatar name to uniquely identify a person or entity and enable delivery of objects.

A problem with existing delivery services and systems is that there is no way of exchanging objects between different worlds. The existing solutions only work within a single world. It is therefore not possible for an entity in a virtual world to send for instance a virtual card to someone in the real world or vice versa. One solution to this could be the exchange of real world addresses between the sender and the receiver of the object. However, this means that a person has to give up his anonymity which is created by the virtual world and that a person's privacy may be at risk because other people are then able to map a virtual identity to a real person. In addition, virtual worlds and games are often popular amongst teenagers and younger children. By keeping their real identity hidden from the online population, there is less exposure or possible exposure of kids to threats such as people with malicious intent.

It is an objective of the present invention to provide a method for delivering objects from one entity to another entity which ensures privacy for both entities. It is another objective of the present invention to provide a method for delivering objects from one entity to another entity which is able to deal with different worlds.

### Summary of the Invention

The objectives of the present invention are realized by a method for transferring an object between a source having a first identification in a first world and a destination having a second identification in a second world, the method comprising the steps of:
a) sending the object from the source in the first world to the destination using a third identification;
b) translating the object into a translated object or translating the third identification or both; and
c) delivering the object or the translate object to the destination in the second world.

Indeed, by translating an object it becomes possible to deliver an object created in one world to a different world. By translating a third identification to the second world identification it becomes possible to exchange objects while keeping a person's real identity hidden and thus ensuring privacy.

An entity in one world is able to send an object to an entity in another world or even the same world without using the identification of the destination in the destination world. Thus, entities are able to exchange contact information or an identification which is not their real identity in order for them to receive objects from other entities. In addition, the source sending the object may use an identity which is not its real identity or is not the identity in the world wherefrom the object is sent to maintain its own privacy. Thus, the method according to the present invention makes it possible to deliver objects from and to entities by using an identification of these entities which acts as a cover for their real or other identifications.

Translation of an identification can be achieved in various ways. There may be a single central registry, preferably owned or managed by a trusted entity or organization, wherein a mapping between various identifications of a single entity is stored. This way any delivery service is able to obtain the correct identification of an entity in a particular world. However this means that various worlds have to share their information with each other and/or a central registry which imposes a potential privacy risk. Therefore each world may have it's own registry which maps an identification in that world to a particular entity and possibly an identification in another world such as the real world. This way a delivery service has to consult a particular world to be able to translate an identification. A disadvantage thereof is that more interaction is needed with different worlds if an identification has to be translated several times.

In addition to having the ability to hide the identity of a user, the method according to the present invention also allows for the exchange of objects between various worlds using object translation. The translation of an object results in a change of the characteristics of an object in any way such as shape, colour, formatting, layout, etc. to match the possibilities and requirements of the destination world. Having only the step of object translation may be useful in cases where there is no need for identification translation, for instance in a scenario where an object is sent from one virtual world to another virtual world and thus from one virtual identification to another virtual identification. Obviously, the method may also consist of both the step of translating the object and translating the third identification.

A world in the light of the present invention can be a real world such as the physical world which each person experiences every day or a virtual world such as a digital environment wherein entities can experience a wide range of activities. Typical examples of virtual worlds are online multiplayer games, online communities, and generally online environments wherein a number of people are able to interact.

An identification in a world is a way of (uniquely) identifying an entity or user in that world. An identification may also provide a way of determining a destination whereto an object has to be delivered. For instance, in the real world the identification could be a combination of a person's address and name, telephone number, etc. In a virtual world, a person can be identified based on a unique username, a username coupled to the name of the world, a username arid an address, an avatar, an IP address, a Uniform Resource Locator (URL), etc. In general an identification can be any piece of information which uniquely identifies a person, user or location within a world to enable delivery of objects thereto.

Delivery of objects and similarly the sending of objects involves defining the destination thereof on the object or during the sending of the object. According to the present invention it may also be needed to indicate to which world an object has to be sent. For instance, when sending an object from a virtual world to the real world using a virtual world identification as third identification, it is needed to indicate that the delivery should occur in the real world and not the virtual world. Parts of the process of sending and delivery of the objects is subject to various systems such as real world mail or delivery services, virtual mail or delivery systems, etc. and is not part of the invention. For instance the operation of a mail delivery service is irrelevant to the operation of the present invention. However, an embodiment of the present invention may benefit from the ability to interact with such services.

Optionally, in the method for transferring an object according to the present invention the first world is the real world, the second world is a virtual world, and step b) comprises:
- translating the object into a translated object; and
- translating the third identification into the second identification if the third identification is an identification in the first world or if the third identification is an identification in a world different from the first world and the second world.

In case an object is sent from the real world to a virtual world, there is a need for object translation. Because the virtual world is typically a digital environment, this step includes digitalization of the object. In case the object is a document of some sort such as a letter, a postcard, a newspaper, a book, etc., the translation may include steps such as scanning each page or side of the objects. When the object is for instance a 3D object, the transition may include steps such as obtaining a 3D scan from the object, rendering the 3D scan as a digital image or converting the 3D scan into a digital object which can be used and/or moved in the virtual world.

When sending the object, a third identification has to be indicated on the object. The third identification may be an identification in the virtual world whereto the object has to be delivered. In such case, there is no need for a translation of the third identification into an identification in the virtual world whereto the object has to be delivered. However, if a person gives up his privacy, he may share his real world identification with the sender of the object. In that case, the sender indicates the receiver's real world identification as third identification for the object. This third identification has then to be translated into the identification for the receiving person in the virtual world whereto the object is sent. Alternatively, the sender may be aware of an identification of the destination in a world different from the real world or the virtual world whereto the object has to be delivered, which also requires a translation of the indicated third identification to the identification of the receiving person in the virtual world whereto the object has to be delivered.

Optionally, in the method for transferring an object according to the present invention the first world is the real world, the second world is the real world, the third identification is an identification in a world different from the first world and the second world, and the step b) comprise:
- translating the third identification into the second identification. In this example where an object is transferred from a real world entity to a real worlds entity as a result of which the source and destination of the object are both located in the same world, there is no need to translate the object. An example could for instance be the transfer of a postcard between two physical persons whereby a second life avatar is used to identify the destination. Tangible objects in the real world can be delivered to people in the real world using existing delivery systems. However, a third identification translation according to the present invention is needed when the third identification is an identification in a world different from the real world, i.e. an identification in a virtual world.

Optionally in the method for transferring an object according to the present invention the first world is a first virtual world, the second world is a second virtual world different from the first virtual world, and the step b) comprises:
- translating the object into a translated object; and
- translating the third identification into the second identification if the third identification is an identification in the first world or if the third identification is an identification in a world different from the first world and the second world.

In this scenario there is a need for translating the object if the objects are different in the two virtual worlds. For instance the first virtual world may use a 3D graphical representation of objects and the second virtual world may use a 2D graphical representation of objects. An alternative example is that formatting of text in one virtual world may be different from the formatting of text in another virtual world. This means that a translation of one format or presentation to another for the object is needed to make the object deliverable and/or useable in the destination virtual world.

An example of this scenario is when an entity such as a player in a mass multiplayer online game receives a reward for his actions arid desires to have that reward in another online world such as second life. The player sends the reward to his identification in a world different from the online game or second life, for instance his real identity or an identity in another world, and indicates that the reward has to be delivered in the second life world. Thus the identification of the entity is translated from his identification in the third world (such as the real world or a third virtual world such as a different online community) into an identification in second life. In addition, the object translation, this results in the translated object being deliverable to the second life virtual world.

Optionally in the method for transferring an object according to the present invention the first world is a virtual world; the second world also is that virtual world, and the step b) comprises:
- translating the third identification into the second identification if the third identification is an identification in a world different from the virtual world.

This is a case similar to the scenario wherein the world of the sender and the world of the receiver are both the real world, however in this scenario they both reside in the same virtual world. This means that there is no need for object translation as the object was created in the same world as the world where the object is sent to. There may only be a need for identification translation if the third identification is an identification for the receiver different from his identification in the virtual world where he resides in. This has a similar advantage when considering privacy as the real world to real world scenario because an entity is not obliged to reveal its identity in a particular world.

Optionally in the method for transferring an object according to the present invention the first world is a virtual world, the second world is the real world, and the step b) comprises:
- translating the object into a translated object; and
- translating the third identification into the second identification if the third identification is an identification in the first world or if the third identification is an identification in a world different from the first world and the second world.

If the object is sent from a virtual world to the real world, the object has to be translated in a real world object or form. For instance, in case of a letter, postcard, book or newspaper, the digital or virtual version may be translated into a printed version which in turn can be delivered in the real world to the destination. The object may also be a reproduction from the virtual object which can be obtained through a process of 3D printing, manual production, factory based production, etc. The object may also be translated by placing an order at a producer of such objects which delivers the object in the real world. For instance, if the virtual object is a wristwatch, the translation may be done by ordering a real watch in a shop and having the shop transmit the real watch to the destination.

In addition to translation of the object, the third identification may need to be translated to enable delivery of the object. When the third identification is located in a world which is different from the first world and the second world, or when the third identification is located in the first world, a translation is needed to obtain an identification of the correct place of delivery.

Optionally, the source has a fourth identification different from the first identification and step b) further comprises the step of translating the fourth identification into the first identification.
Regular real word mail delivery services often use the address of the sender of a letter as new destination when the letter is undeliverable to the indicated destination.
By adding the step of translating a fourth identification, which may be the identification of the source in a world different from the first world, the system may be able to return undeliverable messages to source or provide the source with a notice of failure. By allowing the source to use an identification different from the first identification, the source may hide his true identity from the intended destination of an object. This may also be used to receive a notification of delivery upon successful or failed delivery to the source in the first world or in the world whereto the fourth identification is related.

The present invention further relates to a system for use in transferring an object between a source having a first identification in a first world and a destination having a second identification in a second world;
characterized in that the system comprises means for translating the object into a translated object, or means for translating a third identification, or both.

The system may be used as an intermediate system between various existing systems or services. The system of the present invention can provide the functionality to existing delivery services of translating objects and/or translating addresses or identification between various worlds. Thus, the system according to the present invention may be able to add new services to the existing mail delivery systems and services. Furthermore, the system is able to safeguard the privacy of it's users by hiding their personal information or preventing other parties from mapping persons to particular identifications in one or more worlds or mapping various identifications of the same person to each other.

The system may have its own database with a mapping between various identifications or it may be able to retrieve such information from external sources such as from each world or external databases which cover a number of worlds. Of course this means that the databases or worlds need a way to determine which identifications belong to the same physical person to provide such a mapping.

The means for translating an object may be devices such as paper printers, 3D printers, moulding devices, 2D scanners, 3D scanners, cryo-elektron tomography, engines of creation using for instance nano technology, etc. Alternatively, the means for translating may be a way of delivering sufficient information to an external party that is able to perform the translation. In such case, the system acts more as a way of finding the correct services for the translation and organizing further delivery of the objects than as translation service.

Optionally the system for use in transferring an object according to the present invention comprises means for locating a storage with the first identification or the second identification.

As described above, the system may need to interact with external sources of information related to the identifications. The system thereto needs to be aware where information can be found. The system may be configured with a list of storage points and the type of information that can be found at those storage points. However, this means that each system has to be configured independently and that changes to worlds or the addition or removal of worlds requires a modification of the system.

It may therefore be advantageous to have a storage location function which enables the system to find the correct location of the identification information for various worlds. This way, only the location function has to be updated with new worlds or when worlds are removed. The system itself only needs to know how it can reach the location function and how it can retrieve information from storage points.

### Brief Description of the Drawings

Fig. 1 illustrates a first use case from the real world to the real world in an embodiment of the present invention;
Fig. 2 illustrates a second use case from the real world to a virtual world in an embodiment of the present invention:
Fig. 3 illustrates a third use case from a virtual world to the real world in an embodiment of the present invention;
Fig. 4 illustrates a fourth use case from a virtual world to another virtual world in an embodiment of the present invention;

### Detailed Description of Embodiment(s)

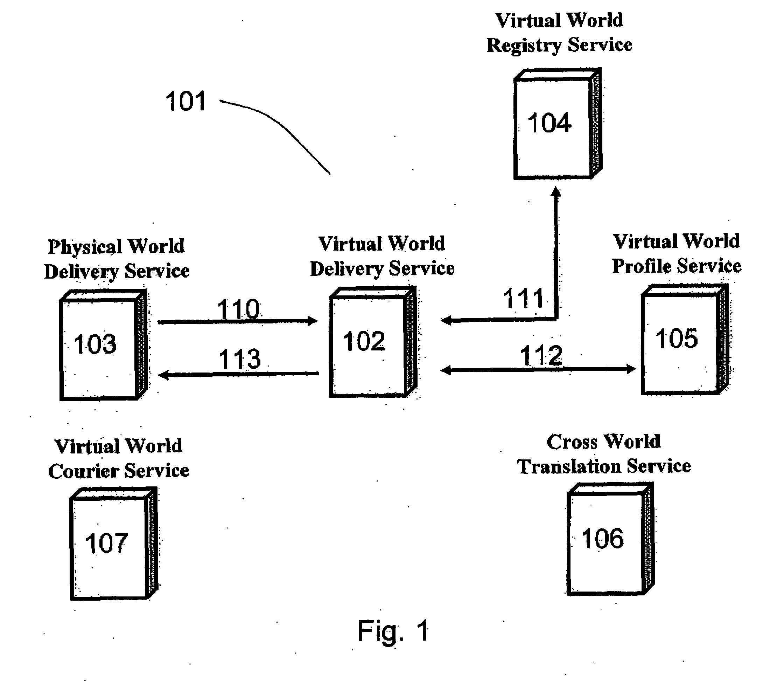

Fig. 1-4 give an architectural view on an embodiment of the system 101 according to the present invention in various use cases. The system 101 is made up out of a Virtual World Delivery Service (VWDS) 102, a Physical World Delivery Service (PWDS) 103, a Virtual World Registry Service (VWRS) 104, a Virtual World Profile Service (VWPS) 105, a Cross World Translation Service (CWTS) 106 and a Virtual World Courier Service (VWCS) 107. The arrows in the drawings represent the respective interactions between the various nodes in each use case.

The VWDS 102 is a node in charge of organizing the delivery of objects using information from other nodes such as VWRS 104 and VWPS 105. It provides that information or an interpretation thereof to services such as PWDS 103 and organizes the interaction with virtual worlds through services such as VWCS 107. In addition, the VWDS 102 is in charge of organizing the translation of objects through the CWTS 106.

The PUDS 103 is a service in charge of delivering objects in the real world. For instance PWDS 103 can be a regular mail service, national or international courier service. The PWDS 103 is able to deliver objects in the real world and is able to receive objects from the real world for delivery in the real world or one or more virtual worlds. The PWDS 103 is able to interact with the VWDS 104 to obtain information such as identification translation or to obtain translated objects. Alternatively, the PWDS 103 may be able to retrieve the information from the VWRS 104, VWPS 105, CWTS 106 directly, without using the VWDS 102 as an intermediate node.

The VWRS 104 provides a lookup functionality to nodes such as the VWDS 102 and the PWDS 103. It enables these nodes to determine where information for an identification transition can be found, for instance by providing a location of VWPS 105. In addition, VWRS 104 may provide an API that indicates how a particular world can be reached and how a service can interact with that particular world. Of course, such API information may also be stored in other nodes such as the VWPS 105.

The VWPS 105 stores information rotated to users and identifications. One example is by using profiles for users or persons wherein each of their identifications in various worlds are stored and which allow for the mapping of one identification in one world to another identification in that world or in a different world.

The CWTS 106 is responsible for translating objects from one world to another world. For instance the CWTS 106 may provide features such as scanning 2D or 3D objects to obtain a digital version which can be used in the virtual world, converting digital document or objects from one format to another, printing 2D or 3D objects, etc. In general the CWTS 106 provides the functionality which translates the object into a format that can be used in the world whereto the object is to be delivered.
The VWCS 107 is responsible for the delivery of objects in the virtual world. For instance VWCS 107 may be an in-game mail system of an online multiplayer game, a mail delivery system in an online community, etc. The VWCS 107 may be part of the VWDS 102 or may be a separate node in the system 101.

Next the various use case scenarios Will be explained with respect to the above stated architecture. Fig. 1 to 4 each illustrate the interaction between the nodes in the system 101 which is a possible embodiment of the present invention. These interactions are represented by arrows and the numbers on each arrow indicate the order wherein the steps are performed in this particular example. The invention should not be considered as limited to these use cases or to the steps shown in these drawings.

Fig. 1 illustrates the use case scenario wherein a user being the source of the object in the physical world sends an object to a user being the destination in the physical world. The source uses a virtual identification of the destination, and in this particular example the virtual identification is the username of the destination in an online world. The object is marked with the identification of the destination and handed over to the PWDS 103. In step 110 the PWDS 103 requests a translation of the third identification to an identification in the real World. The VWDS 102 locates the VWPS 105 by contacting the VWRS 104 in step 111. The VWRS 104 provides communication information of VWPS 105 and an API to interact with VWPS 105 to the VWDS 102. The VWDS 102 then contacts the VWPS 105 in step 112 according to the API and retrieves the correct information for the identification of the destination in the real world. The step 112 further also includes receiving the information from VWPS 105 by VWOS 102. Finally the VWDS 102 delivers the translated identification to the PWDS 103 which is then able to deliver the object at the destination as if it were sent with an identification in the real world from the start.

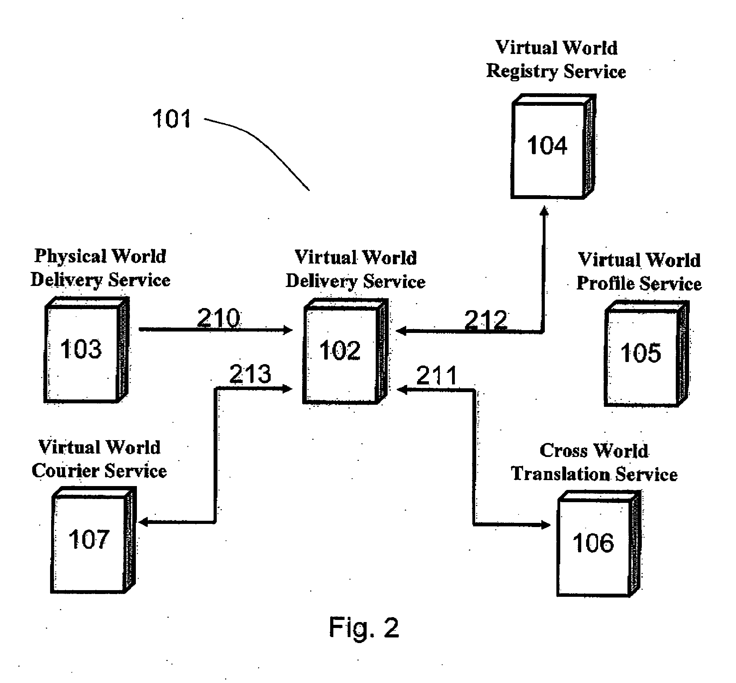

Fig. 2 illustrates the use case scenario wherein a user being the source of the object in the physical world sends an object to a user being the destination in a virtual world. The source uses a virtual identification of the destination in the world whereto the object has to be delivered. The PWDS 103 receives the object from the source and when it is determined that the destination is a virtual world, PWDS 103 delivers the object to VWDS 102 in step 210. The VWDS 102 then needs to translate the object to a virtual object and therefore delivers the object to CWTS 106 in step 211. After translation, the CWTS 106 delivers the translated object, and optionally the original object back to the VWDS 102 which is also indicated by step 211. The VWDS 102 then needs to deliver the transited object to the correct destination in the virtual world. Therefore the VWDS 102 retrieves a point of communication with that virtual world from VWRS 105 in step 212. Step 212 may also induce API information on how VWDS 102 should interact with that point of communication, In this particular example, the point of communication is the VWCS 107. The VWDS 102 then delivers the translated object to VWCS 107 as is indicated by step 213 after which VWCS 107 delivers the translated object to the destination.

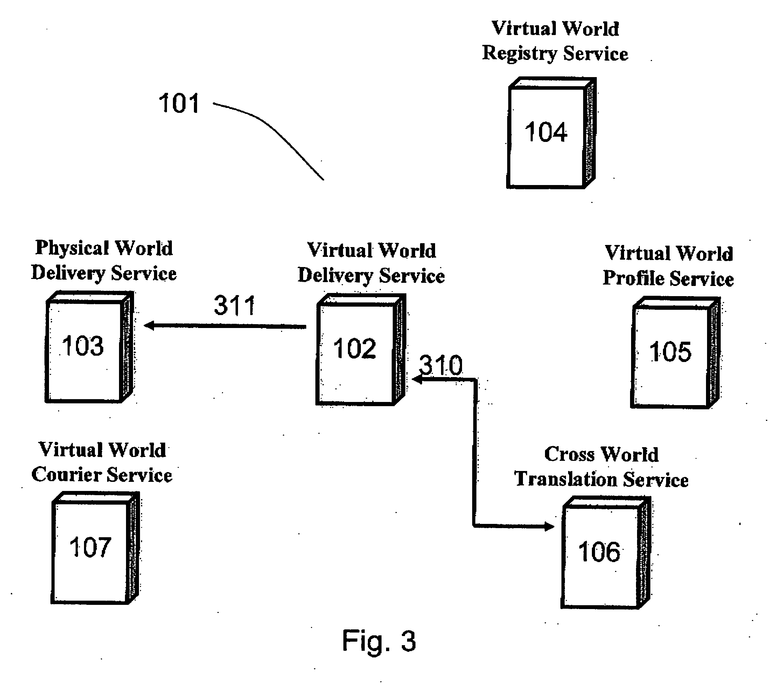

Fig. 3 illustrates the use case scenario wherein a user being the source of the object in a virtual world sends an object to a user being the destination in the real world. Fig. 3 only shows the basic steps used in this scenario. The object is received by the VWDS 102, for instance directly from the source or through another node such as VWCS 107, but this step is not shown in Fig. 3. Because the object is a virtual object and the destination is a physical destination in the real world, the VWDS 102 needs to translate the object using CWTS 106 as is indicated by step 310. In this particular example, CWDS 106 creates a 3D model of a virtual object or prints documents such as postcards, letters, newspapers or books. Once the object has been translated and VWDS 102 has received the translated object in step 310, the VWDS 102 sends the translated object to the PWDS 103 as is indited in step 311.

Depending on what identification was used for the destination, other steps may be needed. If the third identification was the identification of the destination in the real world, there is no need for additional steps. However, if the third identification was an identification of the destination in a virtual world, the VWDS 102 needs to translate the third identification. Such translation may include consulting the VWRS 104 and/or the VWPS 105. However these additional steps are not shown in Fig. 3.

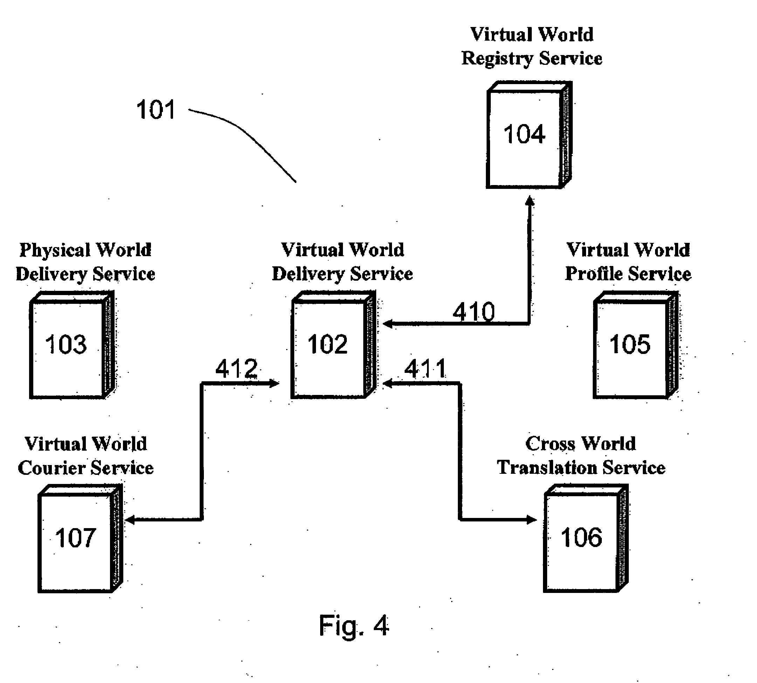

Fig. 4 shows the use case scenario wherein a user being the source of the object in a virtual world sends an object to a user being the destination of the object in a virtual world. The VWDS 102 receives the object with a third identification. If the source and destination are based in the same virtual world, there is no need for an object translation. If the source and destination are in different worlds, the VWDS 102 which has received the object either directly from the source or though an intermediate node such as a VWCS 107 has to contact a translation service such as CWTS 106 as is indicated in step 411. The VWDS 102 may need to contact the VWRS 104 first to find an appropriate CWTS 106.

If the third identification is not related to the world whereto the object has to be delivered, the PWDS 102 may need to consult the VWPS 105 to obtain an identification translation. Such consultation may be preceded by consulting the VWRS 104 to locate the VWPS 105. Step 410 indicates the consulting of the VWRS 104 to determine the correct VWCS 107 which can be used to deliver the object to the correct destination. The delivery of the object to VWCS 107 for delivery to the destination is illustrated by step 412.

It should be noted that the topology or logical overview of system 101 is not the only possible embodiment of the system according to the present invention or the only system wherein the method of the present invention can be applied. For instance there may be no VWRS or VWPS in the system. In such case, the information may be present in the VWDS. Alternatively, VWRS and VWPS may be a single node or other combinations of nodes may be possible such as integrating VWCS and VWPS. In the latter case, the operator of a virtual world may provide the mapping to outside parties to avoid that such parties are able to determine who is who in their virtual world.

It should further also be noted that the system of the present invention may be spread throughout various locations. For instance the PWDS is not a single device, person or location but may consist of a large and complex structure of locations, people and services which are able to deliver objects in the physical world.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words; it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A method for transferring an object between a source having a first identification in a first world and a destination having a second identification in a second world, said method comprising the steps of:
a) sending said object from said source in said first world to said destination using a third identification;
b) translating said object into a translated object or translating said third identification or both; and
c) delivering said object or said translated object to said destination in said second world.

2. The method for transferring an object according to claim 1,
**characterized in that** said first world is the real world, said second world is a virtual world, and said step b) comprises:
- translating said object into a translated object; and
- translating said third identification into said second identification if said third identification is an identification in said first world or if said third identification is an identification in a world different from said first world and said second world.

3. The method for transferring an object according to claim 1,
**characterized in that** said first world is the teat world, said second world is the real world, said third identification is an identification in a world different from said first world and said second world, and said step b)comprises:
- translating said third identification into said second identification.

4. The method for transferring an object according to claim 1,
**characterized in that** said first world is a first virtual world, said second world is a second virtual world different from said first virtual world, and said step b) comprises:
- translating said object into a translated object; and
- translating said third identification into said second identification if said third identification is an identification in said first world or if said third identification is an identification in a world different from said first world and said second world.

5. The method for transferring an object according to claim 1,
**characterized in that** said first world is a virtual world; said second world also is said virtual world, and said step b) comprises:
- translating said third identification into said second identification if said third identification is an identification in a world different from said virtual world.

6. The method for transferring an object according to claim 1,
**characterized in that** said first world is a virtual world, said second world is the real world, and said step b) comprises:
- translating said object into a translated object; and
- translating said third identification into said second identification if said third identification is an identification in said first world or if said third identification is an identification in a world different from said first world and said second world.

7. The method for transferring an object according to claim 1, **characterized in that** said source has a fourth identification different from said first identification and said step b) further comprises the step of translating said fourth identification into said first identification.

8. A system for use in transferring an object between a source having a first identification in a first world and a destination having a second identification in a second world;
**characterized in that** said system comprises means for translating said object into a translated object, or means for translating a third identification, or both.

9. The system for use in transferring an object according to claim 8,
**characterized in that** said system further comprises means for locating a storage with said first identification or said second identification.
